# EUROPÄISCHE PATENTSCHRIFT

(11) **EP 1 708 853 B1**
(45) Veröffentlichungstag und Bekanntmachung des Hinweises auf die Patenterteilung: **01.03.2017**
(21) Anmeldenummer: 04802814.6
(22) Anmeldetag: 24.11.2004
(51) Int. Cl.: B25F 5/00, H02P 25/14

(54) **ELEKTROHANDWERKZEUG MIT SPEICHERMÖGLICHKEIT**
ELECTRIC HAND-HELD POWER TOOL HAVING A MEMORY FUNCTION
OUTIL ELECTRIQUE A MAIN PRESENTANT UNE POSSIBILITE DE MEMORISATION

(30) Priorität: 22.01.2004 DE 102004003191
(43) Veröffentlichungstag der Anmeldung: 11.10.2006
(73) Patentinhaber: ROBERT BOSCH GMBH, 70442 Stuttgart (DE)
(72) Erfinder: HAHN, Dietmar, 70839 Gerlingen (DE); DI NICOLANTONIO, Aldo, 4565 Recherswil (CH)
(86) Internationale Anmeldenummer: PCT/DE2004/002605
(87) Internationale Veröffentlichungsnummer: WO 2005/070625

(56) Entgegenhaltungen:
- DE-A1- 3 329 971
- DE-A1- 10 023 174
- DE-A1- 19 808 671
- US-A1- 2003 196 824

## Beschreibung

Die Erfindung betrifft ein Elektrohandwerkzeug nach Oberbegriff des Anspruchs 1.

### Stand der Technik

Elektrohandwerkzeuge werden mit Regel- und/oder Steuereinrichtungen ausgestattet, insbesondere um ein materialgerechtes Arbeiten zu ermöglichen. Seit geraumer Zeit ist beispielsweise bekannt, Elektrohandwerkzeuge mit einer Drehzahlregelung auszustatten. Insbesondere sind Drehzahlregelungen aus dem Stand der Technik bekannt, die über einen sogenannten Gasgebe-Schalter ein langsames Anlaufen und ein im Zuge der Weiterbetätigung des Gasgebe-Schalters erfolgendes Zunehmen der Drehzahl bis hin zu der dem Motor möglichen Höchstdrehzahl erlauben. Diese Drehzahlregelungen ermöglichen ein Sanftanlaufen der Maschine, das zu einem präziseren Arbeitsbeginn (Anbohren, Ansägen oder ähnliches) führt. Daneben werden überdies sowohl der Elektromotor des Elektrohandwerkzeuges als auch die bewegten mechanischen Teile des Elektrohandwerkzeuges geschont, beispielsweise Getriebe. Gleichfalls wird durch den Sanftanlauf die Spannungsversversorgung des Elektrohandwerkzeuges, beispielsweise das Hausstromnetz, nicht durch einen hohen Anlaufstrom belastet.

Diese Drehzahlregelungen ermöglichen auch in gewissem Umfang eine Einstellung und/oder Vorgabe einer materialgerechten Arbeitsdrehzahl. Gerade bei den aus dem Stand der Technik bekannten Gasgebe-Schaltern ist diese Einstellung naturgemäß nur unpräzise und auch nur wenig reproduzierbar möglich. Insbesondere kann nicht sichergestellt werden, dass der Bediener den Gasgebe-Schalter jeweils gleich weit eindrückt, weshalb bei jeder Betätigung eine abweichende Drehzahl eingestellt wird.

Darüber hinaus sind Einstellvorrichtungen zur Drehzahlregelung bekannt, die einen der erwähnten Gasgebe-Schalter mit einem Stellrad kombinieren, das die Vorwahl einer bestimmten Maximaldrehzahl zulässt. Hieran ist aber nachteilig, dass die Drehzahleinstellung/ -Vorgabe nicht variabel und wahlfrei erfolgen kann, sondern nur durch eine Vorwahl am Stellrad, die im Regelfall bei ausgeschalteter Maschine erfolgt. Insbesondere ist es im Regelfall nicht möglich, besonders niedrige oder besonders hohe Drehzahlen über die Einstelleinrichtung vorzuwählen.

Aus der DE 199 30 435 C1 ist eine Drehzahlsteuerungselektronik bekannt, die die Festschreibung einer vorgewählten Drehzahl ermöglicht. Hierbei wird über einen Gasgebe-Schalter eine Drehzahl vorgewählt, und durch Betätigen einer Einrichtung festgeschrieben. Danach bleibt diese Drehzahl bis zum Ausschalten des Elektrowerkzeuges konstant erhalten. Es handelt sich hier also um eine Vorwahl einer Konstantdrehzahl, die zuvor aus einem Drehzahlintervall be-stimmt wird.

Aus der US 2003/0196824 A1 ist ein Elektrohandwerkzeug gemäß dem Oberbegriff des Anspruchs 1 bekannt.

### Vorteile der Erfindung

Dem gegenüber bietet die Erfindung, wie im Vorrichtungsanspruch 1 und im Verfahrensanspruch 8 definiert, den Vorteil, dass über einen Gasgebe-Schalter das gesamte Drehzahlspektrum des Elektromotors eingestellt werden kann. Durch Betätigung einer Einrichtung wird der im Moment der Betätigung anliegende Drehzahlwert in ein Speicherelement übernommen, das der Steuer- und/oder Regeleinrichtung des Elektrohandwerkzeuges zugeordnet ist. Zwischen dem Zustand "aus" (Drehzahl = 0) und dieser vorgewählten Drehzahl lässt sich nun der gesamte Drehzahlbereich bis zum Erreichen der vorgewählten Drehzahl durch Betätigen des Gasgebe-Schalters einstellen. Der gespeicherte Vorgabewert bleibt solange erhalten, bis die Steuer- und/oder Regeleinrichtung des Elektrohandwerkzeugs entweder vom Bediener mittels einer hierfür vorgesehenen Einrichtung zurückgesetzt wird, oder bis das Elektrohandwerkzeug von der Versorgungsspannung getrennt wird.

Das Ein- und Ausschalten lässt den gespeicherten Vorgabewert unverändert (im Gegensatz zu der DE 199 30 435 C1, bei der jedes Ausschalten die vorgewählte Konstantdrehzahl löscht).

Damit ist es möglich, mehrmals hintereinander den gesamten Drehzahlbereich zu durchlaufen, was sowohl ein stromkreis- wie auch materialschonendes Sanftanlaufen des Elektrohandwerkzeuges wie auch ein zuverlässiges Reproduzieren der voreingestellten Höchstdrehzahl ermöglicht und somit überdies eine materialgerechte Bearbeitung zulässt. Dies ist vor allem dann hilfreich, wenn eine Vielzahl gleicher oder ähnlicher Werkstücke in Serie zu bearbeiten sind.

Hierfür ist vorgesehen, dass der Steuer- und/oder Regeleinrichtung für den Elektromotor des Elektrohandwerkzeuges ein elektronisches Speicherelement für mindestens einen Betriebszustand des Elektromotors zugeordnet ist. Das Speicherelement kann in der Steuer- und/oder Regeleinrichtung integriert sein.

Die Steuer- und/oder Regeleinrichtung ist hierbei insbesondere eine Drehzahlregelung.

Bei einer bevorzugten Ausführungsform der Erfindung wird die Steuer- und/oder Regeleinrichtung als Digitalbaustein ausgeführt. Bei einer besonders bevorzugten Ausführungsform ist diese ein Microcontroller.

Zur Vereinfachung der Handhabung durch den Bediener ist bei einer weiteren Ausführungsform der Erfindung vorgesehen, der Steuer- und/oder Regeleinrichtung ein Anzeigeelement zuzuordnen, das den jeweils vom Bediener durch etwa einen Gasgebe-Schalter gerade veranlassten Momentanwert des jeweils veranlassten Betriebszustandes des Elektrowerkzeuges, insbesondere also der Drehzahl, anzeigt. Der Bediener kann hierdurch auf sehr einfache Weise erkennen, mit welcher Drehzahl er momentan arbeitet. Die Anzeige wird vorteilhaft als digitale Ziffernanzeige ausgeführt, die eine direkte Ablesung des anliegenden Wertes erlaubt. Es ist auch möglich, die Anzeige als Balkenanzeige vorzusehen, wobei der Bediener analog erkennen kann, wo sich der derzeitige Wert innerhalb des Einstellbereiches befindet. Besonders vorteilhaft ist eine Kombination beider Anzeigeformen.

Weiter ist vorgesehen, den Zustand des Speicherelementes mittels einer Anzeige, beispielsweise einer Leuchtdiode, dem Bediener zu signalisieren:
- ein Aufleuchten der Leuchtdiode bedeutet: Speicherwert vorhanden,
- ein Nichtaufleuchten bedeutet dementsprechend: kein Speicherwert vorhanden, Maximaldrehzahl möglich.

In einer bevorzugten Ausführungsform der Erfindung ist die Steuer- und/oder Regeleinrichtung eine Phasenanschnittsteuerung, die nicht nur ein feinfühliges Dosieren der Motorabgabeleistung und der Drehzahl zulässt, sondern auch eine Leistungskonstanthaltung unter Last ermöglicht.

In vereinfachter Weise lässt sich das Verfahren zur Betriebsführung des Elektromotors des Elektrohandwerkzeugs so umschreiben, dass mittels eines Einstellelementes eine bestimmte Drehzahl vorgegeben wird, und diese in ein Speicherelement übernommen wird. Die so gespeicherte Drehzahl wird bei jeder weiteren Betätigung des Einstellelementes (beispielsweise des Gasgebe-Schalters) als Maximaldrehzahl übernommen; höhere Drehzahlen als die im Speicherelement hinterlegte sind demnach auch bei vollständigem Durchziehen des Gasgebe-Schalters nicht möglich. Das Intervall zwischen Drehzahl n=0 (also dem Betriebszustand "aus") und der im Speicherelement hinterlegten Höchstdrehzahl sind im Zuge des gesamten Betätigungsweges des Einstellelementes (also etwa des Gasgebe-Schalters) vom Bediener wahlfrei einstellbar.

Eine bevorzugte Ausführung dieses Verfahrens zur Betriebsführung eines Elektromotors eines Elektrohandwerkzeuges sieht vor, dass die Steuer- und/oder Regeleinrichtung initialisiert und/oder das Speicherelement gelöscht wird, wenn das Elektrohandwerkzeug nach Trennung von seiner Versorgungsspannung erstmals wieder mit der Versorgungsspannung beaufschlagt wird, insbesondere also etwa, wenn es nach Netztrennung erstmalig wieder eingesteckt wird. In diesem Zustand steht dem Bediener der gesamte Leistungs- beziehungsweise Drehzahlbereich des Elektromotors zur Verfügung. Er kann durch Betätigen des Gasgebe-Schalters vom Betriebszustand "aus" (Drehzahl n=0) bis zur Maximalabgabeleistung (Drehzahl n=max) jede beliebige, von dem Elektromotor ermöglichte Drehzahl einstellen. Demzufolge ist der Betätigungsweg des Einstellelementes (also etwa des Gasgebe-Schalters) so ausgelegt und skaliert, dass im nicht-gedrücktem Zustand die Drehzahl n=0 ("aus") anliegt, und im vollständig durchgedrückten Zustand die Drehzahl n=max (maximale Drehzahl). Innerhalb dieses Intervalls kann der Bediener nun durch Betätigen des Einstellelementes (des Gasgebe-Schalters) eine beliebige Drehzahl auswählen, wobei ihm der gesamte Drehzahlbereich zur Verfügung steht, den die Maschinen abzugeben in der Lage ist. Die Steuer- und/oder Regeleinrichtung hält bei gleichmäßigem Gedrückthalten des Einstellelementes die Drehzahl konstant. Betätigt der Bediener das Betätigungselement bei einer bestimmten Momentandrehzahl, wird diese Momentandrehzahl in das der Steuer- und/oder Regeleinrichtung zugeordnete Speicherelement übernommen und gehalten, solange der Gasgebe-Schalter gedrückt bleibt. Gleichzeitig wird der Betätigungsweg des Einstellelementes (also des Gasgebe-Schalters) neu skaliert, wobei in nicht-gedrücktem Zustand der Betriebszustand "aus" (Drehzahl n=0) und im maximal eingedrückten Zustand die Drehzahl n="gespeicherte Momentandrehzahl" = "im Speicherelement hinterlegte Drehzahl" eingestellt wird. Bei jedem wiederholten Betätigen des Einstellelementes liegt diese Neuskalierung der Drehzahleinstellung beziehungsweise der Einstellung der Motorabgabeleistung zugrunde. Die zuvor vom Bediener durch Betätigung eines Betätigungselementes gespeicherte Momentandrehzahl wird also nunmehr als Maximaldrehzahl und als Endwert des Betätigungsweges des Einstellelementes reproduziert. Höhere Drehzahlen als die zuvor im Speicher hinterlegte sind demzufolge auch bei vollständigem Durchdrücken des Einstellelementes (des Gasgebe-Schalters) nicht mehr erreichbar.

Will der Bediener wieder eine höhere Drehzahl einstellen oder eine höhere Drehzahl einstellen und diese als Maximaldrehzahl abspeichern, muss er entweder entsprechend dem ersten der oben genannten Verfahrensschritte das Elektrohandwerkzeug von der Versorgungsspannung trennen und wieder anschließen, wobei das Elektrohandwerkzeug initialisiert und das Speicherelement gelöscht wird, oder er muss durch ein Betätigungselement, das die Initialisierung und Löschung des Speicherelementes herbeiführt, die zuvor gewählte Höchstdrehzahl und Skalierung des Bedienungsweges des Einstellelementes löschen.

### Zeichnungen

Die Erfindung wird nachfolgend anhand von Zeichnungen näher erläutert.

Es zeigen:
- Figur 1: Eine schematische Darstellung eines Elektrohandwerkzeuges mit einer Steuer- und/oder Regeleinrichtung, (Blockschaltbild),
- Figur 2: Die Skalierung/Neuskalierung des Betätigungsweges des Einstellelementes (Gasgebe-Schalters)

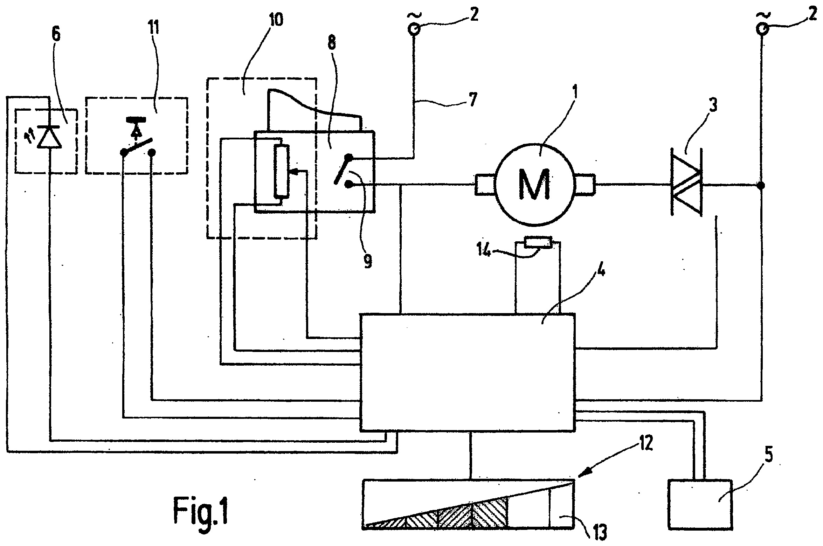

Figur 1 zeigt in prinzipieller Blockdarstellung einen Elektromotor 1 eines nicht näher dargestellten Elektrohandwerkzeuges. Dem Elektromotor wird die Versorgungsspannung über die Klemmen 2 zugeführt. Die dem Motor als Betriebsspannung zugeführte Versorgungsspannung wird in üblicher Weise von einem Triac 3 geregelt, der einer Steuer- und/oder Regeleinrichtung zugeordnet ist. Der Steuer- und/oder Regeleinrichtung 4 ist ein Speicherbaustein 5 zugeordnet, dessen Betriebszustand über eine Leuchtdiode 6 signalisiert wird. In der Versorgungsspannungzuleitung 7 liegt ein als Gasgebe-Schalter 8 ausgeführtes Schaltelement, das ein Ein-/Aus-Schaltelement 9 sowie ein Einstellelement 10 umfasst. Das Ein-/Aus-Schaltelement 9 schaltet hierbei die Versorgungsspannung ein oder aus, während das Einstellelement 10 der Steuer- und/oder Regeleinrichtung 4 zugeordnet ist. Der Steuer- und/oder Regeleinrichtung 4 ist ferner ein Betätigungselement 11 zugeordnet, das hier als Taster ausgeführt ist. Der Steuer- und Regeleinrichtung 4 ist weiter ein Drehzahlsensor 14 zugeordnet, der ein der Drehzahl proportionales Signal liefert. Ferner ist der Steuer- und/oder Regeleinrichtung ein Anzeigeelement 12 zugeordnet, das den jeweils anliegenden Zustand, nämlich hier die gerade anliegende Drehzahl anzeigt. Das Anzeigeelement 12 ist hier als analoge Balkenanzeige 13 ausgeführt, auf der vom linken Rand als Mindestdrehzahl- bis hin zum rechten Rand als Höchstdrehzahl-Anzeigeposition die gerade anliegende Drehzahl abgelesen werden kann, wobei diese Form der Darstellung einen Überblick über den bereits genutzten bzw. den noch vorhandenen Drehzahlbereich des Elektromotors 1 erlaubt.

Bei Beaufschlagung mit Versorgungsspannung über die Anschlussklemmen 2 nach Trennung von der Versorgungsspannung wird die Steuer- und/oder Regeleinrichtung 4 initialisiert und das Speicherelement 5 gelöscht; es liegt demnach ein definierter Ausgangszustand der Steuer- und/oder Regeleinrichtung sowie des Speicherelements vor, dergestalt, dass die Steuer- und/oder Regeleinrichtung 4 den gesamten Leistungs- und Drehzahlbereich des Elektromotors 1 zur Verfügung stellt, nur in Abhängigkeit davon, wieweit das Einstellelement 10 im Gasgebe-Schalter 8 betätigt wird. Bei Eindrücken des Gasgebe-Schalters 8 durch den Bediener wird über das Ein-/ Aus-Schaltelement 9 der Betriebsstrom zur Verfügung gestellt, und über das Einstellelement 10 und die Steuer- und/oder Regeleinrichtung 4 in Verbindung mit dem Triac 3 die Motorleistung beziehungsweise -drehzahl des Elektromotors 1 eingeregelt. Die in diesem Zustand anliegende Drehzahl wird von dem Drehzahlsensor 14 erfasst und auf der Balkenanzeige 13 des Anzeigeelementes 12 für den Bediener dargestellt. Durch Betätigung des Betätigungselementes 11, das als Taster ausgeführt ist, wird der gerade anliegende Drehzahlwert des Elektromotors 1 in das Speicherelement 5 übernommen. Die Abspeicherung dieses Wertes wird durch die Leuchtdiode 6 dem Bediener signalisiert. Eine erneute einmalige Betätigung des Betätigungselementes 11 speichert einen neuen, gerade anliegenden Drehzahlwert, wobei dieser Drehzahlwert höchstens der bisher bereits gespeicherte Drehzahlwert sein kann. Eine zweimalige Betätigung des Betätigungselementes 11 innerhalb eines in der Steuer- und/oder Regeleinrichtung 4 hinterlegten Zeitfensters löscht den im Speicherelement 5 gespeicherten Drehzahlwert, und die Leuchtdiode 6 erlischt.

Die vorstehend beschriebenen Funktionsweisen können entweder, wie beschrieben, hinsichtlich der Drehzahlerfassung mit einem Drehzahlsensor 14 realisiert werden, oder durch kontinuierliche Messung der Spannungen des Elektromotors, also auf indirektem Wege, wobei der Drehzahlsensor als eigenes Bauteil entfällt. Die Ausführung mit Drehzahlsensor 14 ist genauer, hierbei jedoch etwas kostenträchtiger als die Variante der indirekten Messung über die Spannung des Elektromotors.

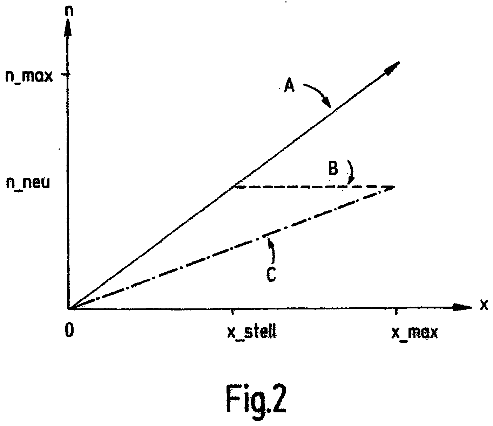

Figur 2 zeigt innerhalb eines Koordinatensystems die Abhängigkeit der Drehzahl n des Elektromotors 1 in Abhängigkeit vom Betätigungsweg x des als Gasgebe-Schalter 8 ausgeführten Einstellelementes 10. Die Gerade A zeigt die Initiallinie, das ist der Drehzahlverlauf von n=0 bis n=nₘₐₓ im initialisierten Zustand der Steuer- und/oder Regeleinrichtung 4 und des Speicherelementes 5. Dies ist der Drehzahlverlauf, der sich im initialisierten Zustand in Abhängigkeit vom Betätigungsweg x ergibt, nämlich ein Durchlaufen des gesamten Drehzahlbereichs, der dem Elektromotor 1 bis zur maximalen Leistungsabgabe möglich ist, in einer im wesentlichen linearen Weise. Im Zuge der Betätigung des als Gasgebe-Schalters 8 ausgeprägten Einstellelementes 10 entlang des Betätigungsweges zwischen x₀ bis xₘₐₓ ergibt sich auf einer beliebigen Zwischenstellung xₛₜₑₗₗ eine Drehzahl nₙₑᵤ, deren Niveau in dem Diagramm als die Gerade B dargestellt ist. Wird durch Betätigung des Betätigungselementes 11 dieses Drehzahlniveau nₙₑᵤ in das Speicherelement 5 übernommen, ändert sich auch bei weiterer Betätigung des Einstellelementes 10 über den Gasgebe-Schalter 8 entlang des Betätigungsweges x das Drehzahlniveau nicht mehr (Kurve B). Wird das Einstellelement 10 durch Loslassen des Gasgebe-Schalters 8 in seinen Ruhe- beziehungsweise Aus-Zustand versetzt, erfolgt durch die Steuer- und/oder Regeleinrichtung 4 eine Neuskalierung des Betätigungsweges x dahingehend, dass bei Durchlaufen des Betätigungsweges von 0 bis xₘₐₓ in im wesentlichen linearer Weise eine Drehzahl von n=0 bis n=nₙₑᵤ eingestellt wird (Kurve C). Für das im wesentlichen lineare Durchlaufen des Drehzahlbereiches von n=0 bis n=nₙₑᵤ steht demzufolge nun der gesamte Betätigungsweg des als Gasgebe-Schalter 8 ausgeführten Einstellelementes 10 zur Verfügung, was eine sehr viel feinfühligere Drehzahleinregulierung innerhalb des nunmehr zur Verfügung stehenden Drehzahlintervalles n=0 bis n=nₙₑᵤ erlaubt. Wird das Elektrohandwerkzeug von seiner Versorgungsspannung getrennt, wird die Steuer- und/oder Regeleinrichtung 4 initialisiert und das Speicherelement 5 gelöscht; gleiches erfolgt bei einer Doppelbetätigung dieses Betätigungselements 11 innerhalb eines in der Steuer- und/oder Regeleinrichtung 4 hinterlegten Zeitfensters. Es stellt sich dann bei erneuter Beaufschlagung mit Versorgungsspannung beziehungsweise nach Doppelbetätigung des Betätigungselementes 11 wieder die als Kurve A dargestellte Einstellcharakteristik für die Drehzahl n dar, dergestalt, dass in einer im wesentlichen linearen Weise der gesamte Drehzahlbereich von n=0 bis n=nₘₐₓ durchlaufen werden kann, in Abhängigkeit des Betätigungsweges 0 bis xₘₐₓ des als Gasgebe-Schalter 8 ausgeführten Einstellelementes 10.

Selbstverständlich ist es auch möglich, eine andere als eine lineare Regelcharakteristik anzuwenden, insbesondere also beliebig angepasste, für das jeweilige Einsatzgebiet des Elektrohandwerkzeuges geeignete Kurvenverläufe für die vorbeschriebene Funktion vorzusehen.

## Patentansprüche

1. Elektrohandwerkzeug mit einer Steuer- und/oder Regeleinrichtung für einen Elektromotor, wobei der Steuer- und/oder Regeleinrichtung (4) ein elektronisches Speicherelement (5) für mindestens einen Betriebszustand des Elektromotors (1) zugeordnet ist, und mit einem Einstellelement (10) zur Vorgabe einer Drehzahl, **gekennzeichnet durch** ein Betätigungselement (11) zur Übernahme eines vorliegenden Betriebszustandes als Speicherwert des Speicherelementes (5), wobei der Betriebszustand die **durch** das Einstellelement (10) eingestellte Momentandrehzahl ist, die **durch** Betätigung des Betätigungselements (11) als Maximaldrehzahl speicherbar ist.

2. Elektrohandwerkzeug nach Anspruch1, **dadurch gekennzeichnet, dass** das Speicherelement (5) in der Steuer- und/oder Regeleinrichtung (4) integriert ist.

3. Elektrohandwerkzeug nach einem der vorhergehenden Ansprüche, **dadurch gekennzeichnet, dass** die Steuer- und/oder Regeleinrichtung (4) eine Drehzahlregelung ist.

4. Elektrohandwerkzeug nach einem der vorhergehenden Ansprüche, **dadurch gekennzeichnet, dass** die Steuer- und/oder Regeleinrichtung (4) ein Digitalbaustein, insbesondere ein Microcontroller ist.

5. Elektrohandwerkzeug nach einem der vorhergehenden Ansprüche, **dadurch gekennzeichnet, dass** der Steuer- und/oder Regeleinrichtung (4) ein Anzeigeelement (12) zur Anzeige eines Momentanwertes, insbesondere des Momentanwertes der Drehzahl, zugeordnet ist.

6. Elektrohandwerkzeug nach einem der vorhergehenden Ansprüche, **dadurch gekennzeichnet, dass** dem Speicherelement ein Anzeigeelement (6) zur Anzeige seines Betriebszustandes zugeordnet ist.

7. Elektrohandwerkzeug nach einem der vorhergehenden Ansprüche, **dadurch gekennzeichnet, dass** die Steuer- und/oder Regeleinrichtung (4) eine Phasenanschnittsteuerung ist.

8. Verfahren zur Betriebsführung eines Elektromotors eines Elektrohandwerkzeuges, umfassend die Schritte:
- Vorgabe einer Momentandrehzahl an einem Einstellelement (10),
- Betätigung eines Betätigungselements (11) zur Speicherung dieser Momentandrehzahl in einem Speicherelement (5),
- Reproduktion der gespeicherten Drehzahl als Maximaldrehzahl bei jeder weiteren Betätigung des Einstellelements (10).

9. Verfahren zur Betriebsführung eines Elektromotors eines Elektrohandwerkzeuges nach Anspruch 8, umfassend die Schritte:
- Initialisieren der Steuer- und/oder Regeleinrichtung (4) und/oder Löschen des Speicherelements (5) bei erstmaliger und/oder erneuter Beaufschlagung mit Versorgungsspannung nach Trennung von der Versorgungsspannung und/oder durch den Bediener,
- Skalierung des Betätigungsweges des Einstellelements für Drehzahlen von n=0 (aus) bis n=max (maximale Drehzahl),
- Einstellung und/oder Regelung der Drehzahl in Abhängigkeit von der benutzerseitigen Betätigung des Einstellelements (10),
- Speichern der Momentandrehzahl durch benutzerseitige Betätigung eines Betätigungselementes (11),
- Neuskalierung des Betätigungsweges des Einstellelementes (10) von n=0 (aus) bis n=gespeicherte Momentandrehzahl,
- Reproduktion der gespeicherten Momentandrehzahl als Endwert des Betätigungsweges des Einstellelements (10).

## Claims

1. Electric hand-held power tool having a control and/or regulating device for an electric motor, the control and/or regulating device (4) being assigned an electronic memory element (5) for at least one operating state of the electric motor (1), and having a setting element (10) for predefining a rotational speed, **characterized by** an actuating element (11) for adopting a current operating state as a stored value of the memory element (5), wherein the operating state is the instantaneous rotational speed set by the setting element (10), which can be stored as a maximum rotational speed by actuating the actuating element (11).

2. Electric hand-held power tool according to Claim 1, **characterized in that** the memory element (5) is integrated in the control and/or regulating device (4).

3. Electric hand-held power tool according to one of the preceding claims, **characterized in that** the control and/or regulating device (4) is a rotational speed controller.

4. Electric hand-held power tool according to one of the preceding claims, **characterized in that** the control and/or regulating device (4) is a digital module, in particular a microcontroller.

5. Electric hand-held power tool according to one of the preceding claims, **characterized in that** the control and/or regulating device (4) is assigned a display element (12) for displaying an instantaneous value, in particular the instantaneous value of the rotational speed.

6. Electric hand-held power tool according to one of the preceding claims, **characterized in that** the memory element is assigned a display element (6) for displaying its operational state.

7. Electric hand-held power tool according to one of the preceding claims, **characterized in that** the control and/or regulating device (4) is a phase angle controller.

8. Method for the operational guidance of an electric motor of an electric hand-held power tool, comprising the steps:
- predefining an instantaneous rotational speed on a setting element (10),
- actuating an actuating element (11) to store this instantaneous rotational speed in a memory element (5),
- reproducing the stored rotational speed as a maximum rotational speed during each further actuation of the setting element (10).

9. Method for the operational guidance of an electric motor of an electric hand-held power tool according to Claim 8, comprising the steps:
- initialising the control and/or regulating device (4) and/or erasing the memory element (5) when the supply voltage is applied for the first time and/or re-applied following disconnection from the supply voltage and/or by the operator,
- scaling the actuating travel of the setting element for rotational speeds from n=0 (starting) to n=max (maximum rotational speed),
- setting and/or regulating the rotational speed on the basis of the actuation of the setting element (10) by the user,
- storing the instantaneous rotational speed as a result of actuation of an actuating element (11) by the user,
- re-scaling the actuating travel of the setting element (10) from n=0 (starting) to n=stored instantaneous rotational speed,
- reproducing the stored instantaneous rotational speed as final value of the actuating travel of the setting element (10).

## Revendications

1. Outil manuel électrique, avec un dispositif de commande et/ou de régulation pour un moteur électrique, au dispositif de commande et/ou de régulation (4) étant associé un élément de mémoire (5) électronique pour au moins un état de service du moteur électrique (1) et avec un élément de réglage (10) destiné à prédéfinir un régime, **caractérisé par** un élément de manoeuvre (11) destiné à reprendre un état de service présent, en tant que valeur mémorisée de l'élément de mémoire (5), l'état de service étant le régime momentané réglé par l'élément de réglage (10), qui par manoeuvre de l'élément de manoeuvre (11) est mémorisable en tant que régime maximal.

2. Outil manuel électrique selon la revendication 1, **caractérisé en ce que** l'élément de mémoire (5) est intégré dans le dispositif de commande et/ou de régulation (4).

3. Outil manuel électrique selon l'une quelconque des revendications précédentes, **caractérisé en ce que** le dispositif de commande et/ou de régulation (4) est une régulation du régime.

4. Outil manuel électrique selon l'une quelconque des revendications précédentes, **caractérisé en ce que** le dispositif de commande et/ou de régulation (4) est un module numérique, notamment un microcontrôleur.

5. outil manuel électrique selon l'une quelconque des revendications précédentes, **caractérisé en ce qu'**au dispositif de commande et/ou de régulation (4) est associé un élément d'affichage (12) destiné à afficher une valeur momentanée, notamment la valeur momentanée du régime.

6. Outil manuel électrique selon l'une quelconque des revendications précédentes, **caractérisé en ce qu'**à l'élément de mémoire est associé un élément d'affichage (6) destiné à afficher son état de service.

7. Outil manuel électrique selon l'une quelconque des revendications précédentes, **caractérisé en ce que** le dispositif de commande et/ou de régulation (4) est un redressement à l'entrée des phases.

8. Procédé destiné à la gestion opérationnelle d'un moteur électrique d'un outil manuel électrique, comprenant les étapes :
- de la prédéfinition d'un régime momentané à un élément de réglage (10),
- de la manoeuvre d'un élément de manoeuvre (11) pour mémoriser ledit régime momentané dans un élément de mémoire (5),
- de la reproduction du régime mémorisé en tant que régime maximal lors de chaque manoeuvre supplémentaire de l'élément de réglage (10).

9. Procédé destiné à la gestion opérationnelle d'un moteur électrique d'un outil manuel électrique selon la revendication 8, comprenant les étapes :
- de l'initialisation du dispositif de commande et/ou de régulation (4) et/ou de la suppression de l'élément de mémoire (5) lors de la première et/ou de la nouvelle application de tension d'alimentation, après coupure de la tension d'alimentation et/ou par l'opérateur,
- du cadrage de la course de manoeuvre de l'élément de réglage pour des régimes de n = 0 (arrêt) à n = max (régime maximal),
- du réglage et/ou de la régulation du régime en fonction de la manoeuvre par l'utilisateur de l'élément de réglage (10),
- de la mémorisation du régime momentané par manoeuvre par l'utilisateur d'un élément de manoeuvre (11),
- du recadrage de la course de manoeuvre de l'élément de réglage (10) de n = 0 (arrêt) à n = régime momentané mémorisé,
- de la reproduction du régime momentané mémorisé en tant que valeur finale de la course de manoeuvre de l'élément de réglage (10).
